# EUROPEAN PATENT APPLICATION

(11) **EP 4 851 661 A1**
(43) Date of publication of application: **09.12.2026**
(21) Application number: 26153940.7
(22) Date of filing: 23.01.2026
(51) Int. Cl.: G01S 7/40, G01S 7/41, G01S 13/931

(54) **CONFIGURATION AWARE BLOCKAGE DETECTION FOR ADAS SENSORS**

(30) Priority: 06.06.2025 IN 202541054667
(71) Applicant: NXP B.V., 5656 AG Eindhoven (NL)
(72) Inventor: Lepuri, Jathin Sravan Kumar, 5656AG Eindhoven (NL); Alkanat, Tunc, 5656AG Eindhoven (NL); Paker, Özgün, 5656AG Eindhoven (NL)
(74) Representative: Schwarzweller, Thomas

(57) **Abstract**

A method and system configured to detect blockage of ADAS sensors.

## Description

### FIELD

The invention relates to a method and system. Particularly, but not exclusively, the invention relates to a computer-implemented method and system. Particularly, but not exclusively, the invention relates to a computer-implemented method of determining the presence of a blockage of an ADAS sensor.

### BACKGROUND

ADAS (Advanced Driver Assistance Systems) sensors are an imperative part of safety in the modern vehicle. They deploy technologies such as cameras, radar and LIDAR to detect surroundings and assist drivers by providing functionality such as automatic braking and lane keeping assistance.

That is to say, it is important that these sensors are functioning well, even though they can often be exposed to the environment outside of the vehicle. Blockages can occur on these sensors and this causes losses which may be of the order of 14-24 dB in received signal energy. These blockages can be due to snow, ice, mud, tree leaves or any other piece of material which may form part of the environment and they significantly degrade the functionality of the ADAS sensor.

However, the increased proliferation of ADAS functionality as we move toward higher levels of autonomy means there are strict requirements on the robustness and reliability of ADAS functions and this necessitates continuous monitoring of the integrity of sensory data. It is imperative, therefore, that we are able to detect cases wherein a sensor such as radar or LIDAR or camera is unable to acquire an accurate representation of the scene.

Aspects and embodiments were conceived with the foregoing in mind.

### SUMMARY

Aspects relate to determining the presence of a blockage on an ADAS sensor. Such an ADAS sensor may be used to provide functionality to a vehicle.

Viewed from a first aspect, there may be provided a computer implemented method of determining the presence of a blockage of one or more ADAS sensors. Such ADAS sensors may be utilised by a vehicle to provide advanced driving functionality or autonomous driving features such as lane keeping, adaptive cruise control and automatic braking among other examples. The method may be implemented by a processing resource. The processing resource may be implemented using hardware or software. The processing resource may be in communication with the one or more ADAS sensors and data may be transmitted between the ADAS sensor and processing resource using any suitable protocol. The processing resource may be mounted to a vehicle which utlises the one or more ADAS sensors.

The method may comprise receiving signal data associated with signals received by an ADAS sensor. The signal data may be radar signal data. The signal data may be a processed form of radar signal data.

The method may comprise processing the signal data to generate processed signal data. This may be by averaging the signal data over a plurality of antennas.

The method may comprise using a trained model to generate blockage inference data indicative of a blockage of the ADAS sensor, wherein the trained model is trained to be independent of the configuration of the ADAS sensor.

The trained model may comprise one or more artificial neural networks and/or one or more convolutional neural networks.

The trained model may deploy one or more artificial neural networks (ANN) or a convolutional neural network (CNN), for example.

ANNs can be hardware - (neurons are represented by physical components) or software-based (computer models) and can use a variety of topologies and learning algorithms.

ANNs usually have three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x))

CNNs can be hardware or software based and can also use a variety of topologies and learning algorithms.

A CNN usually comprises at least one convolutional layer where a feature map is generated by the application of a kernel matrix to an input image. This is followed by at least one pooling layer and a fully connected layer, which deploys a multilayer perceptron which comprises at least an input layer, at least one hidden layer and an output layer. The at least one hidden layer applies weights to the output of the pooling layer to determine an output prediction.

Either of the ANN or CNN may be trained using frame data captured from unblocked and blocked ADAS sensors which are mapped to outputs such as blocked ADAS sensors, unblocked ADAS sensors and partially blocked sensors. The training may be implemented using feedforward and backpropagation techniques.

The trained model may be trained to be independent of the configuration of the ADAS sensor. This means that the trained model is trained to provide outputs which are independent of the specific ADAS sensor configuration being used. This may be by using frame data from a plurality of sensor configurations in the training process to enable the trained model to learn the dependence of the output on the configuration and therefore provide accurate outputs whichever ADAS sensor is being used. The frame data may represent frames obtained from blocked and unblocked sensors to train the network to recognise blocked and unblocked sensors.

A method in accordance with the first aspect provides detection of the blockage of ADAS sensors which independent of the sensor configuration being used for the ADAS sensor. Additionally, by utilising the trained model and the fusion of sensor data with a set of parameters which describe the sensor configuration, the proposed method estimates the probability of the sensor being blocked by a foreign object (e.g. leaves, snow). This also enables the blockage detection to be implemented on resource constrained hardware, i.e. devices with limited power, storage or energy capacity, and the injection of sensor configuration data improves the generalisation of the model to unseen configurations and blocking objects.

Optionally, the method further comprises providing an output indicating blockage of an ADAS sensor, wherein the output is generated based on the blockage inference data. The blockage inference data comprises a probability of a blockage which is generated by the trained model based on the received data. For example, the blockage inference data may infer partial blockage, full blockage or zero blockage of the ADAS sensor.

Optionally, training the model to be independent of the configuration of the ADAS sensor comprises training the trained model using data associated with a plurality of sensor configurations. The plurality of sensor configurations may be defined by one or more of a number of transmission antennas, a number of receiving antennas, transmitter power, receiver gain, effective bandwidth or front end high-pass corner frequency.

Optionally, training the trained model using data associated with a plurality of sensor configurations comprises training a configuration neural network. That is a configuration neutral network is a network which learns the dependence of the sensor data on the configuration and therefore enables output to be provided which is independent of the sensor configuration. The data associated with the plurality of sensor configurations may comprise data associated with one or more of a number of transmitting antennas, a number of receiving antennas, transmission power, receiver gain, effective bandwidth of the sensor configuration, front end high pass filter corner frequency. That is, the training of the configuration network may train the configuration network to determine a dependence of the sensor configuration on the blockage.

Optionally, the trained model may comprise a fusion model which fuses a radar model with the configuration neural network.

The trained model may comprise a convolutional neural network trained to identify features in received data which indicate at least one of a full blockage, partial blockage and no blockage.

Optionally, processing the signal data to generate processed signal data comprises determining an average signal data set comprising average signal data where the average signal data is computed over a plurality of receiving antennas. The average signal data may be computed by the equation: $RD 2 \left(r, v\right) = \frac{1}{{N}_{rx}} {\sum }_{t = 1}^{{N}_{rx}} {\left|RD3\left(t, r, v\right)\right|}^{2}$

Where RD2(r,v) is the average signal data, r and v are respective range and velocity indices and RD3 (t, r, v) is the received frame data at the respective antenna at time instance t at respective range r and velocity v.

The blockage inference data may provide a probability of at least one of a full blockage, partial blockage or no blockage.

Optionally, the processing resource may be mounted to the ADAS sensor. Optionally, the processing resource may be wirelessly connected to the ADAS sensor.

Optionally, the signal data may comprise analog-to-digital conversation (ADC) data.

Optionally, the output may be provided in accordance with the CANBUS standard.

The output may be provided to a computing device. The computing device may be any device which has computational capacity. The computing device may be mounted to a vehicle on which the ADAS sensor is operational. The computing device may be a mobile computing device.

A further aspect may provide an advanced driver assistance system configured to implement the method of the first aspect.

A further aspect may provide vehicle comprising a system in accordance with other aspects. Aspects may also relate to a non-transitory computer readable storage medium having stored thereon executable instructions that, as a result of being executed by a processor of a computer system, cause the computer system to at least perform the method of any one of the first or second aspects.

Aspects may also relate to a system configured to implement the method of any one of the first or second aspects.

Aspects may also relate to a processing resource comprising a processor and memory including executable instructions that, as a result of execution by the processor, causes the reader to perform the method of any one of the first or second aspects.

### DESCRIPTION

An embodiment will now be described by way of example only and with reference to the following drawings in which:
Figure 1a illustrates an example of an ADAS sensor which receives signals indicative of the surroundings of a vehicle to which the ADAS sensor is mounted in accordance with the embodiment;
Figure 1b illustrates radar signal maps which can be associated with i) no blockage and ii) full blockage of an ADAS sensor in accordance with the embodiment;
Figure 1c illustrates a series of steps to be used as part of a method in accordance with the embodiment;
Figure 2 illustrates how a processing resource which can be used to implement one or more parts of the method in accordance with the embodiment; and
Figure 3 illustrates the configuration of a processing resource in accordance with the embodiment;
Figure 4 illustrates the functionality of the components of the processing resource in accordance with the embodiment;
Figure 5 illustrates an example architecture of the deep neural network and the configuration network; and
Figure 6 illustrates the steps of training the blockage detection network in accordance with the embodiment.

We will now describe how a processing resource 200 can be used to determine a blockage at an ADAS sensor 202. The ADAS sensor 202 comprises one or more transmitter and receiving antennas which are configured to respectively transmit toward and receive reflection from a target which may be, for example, another vehicle or a piece of street furniture. Typically, the ADAS sensor 202 is radar-based in that it generates Range Doppler power signals (e.g. ADC samples) which represents the reflected power received by the ADAS sensor 202. This can be used to build a map of such values as is described below with reference to RD2 and RD3 values.

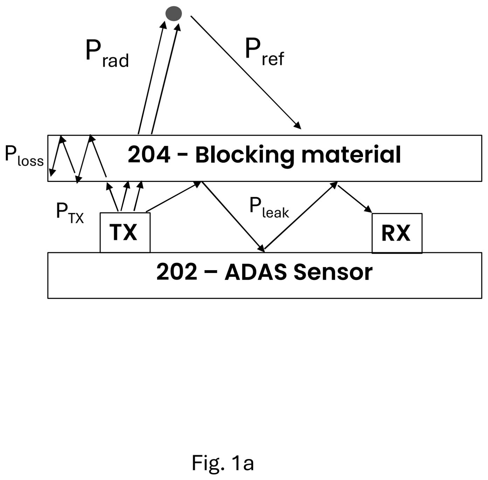

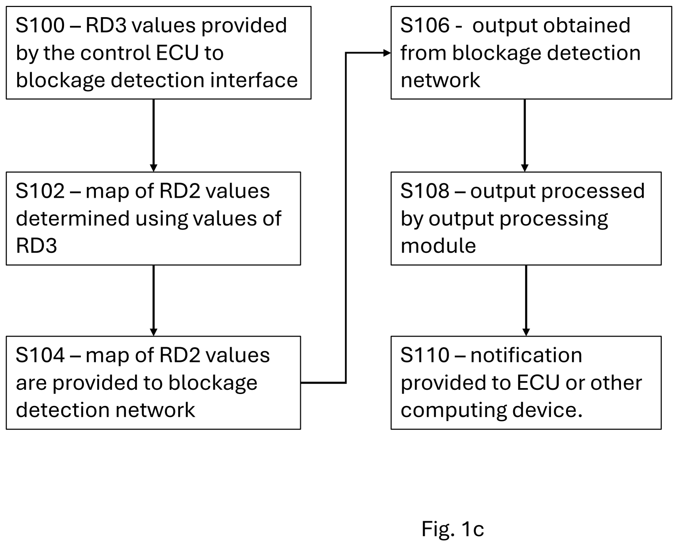

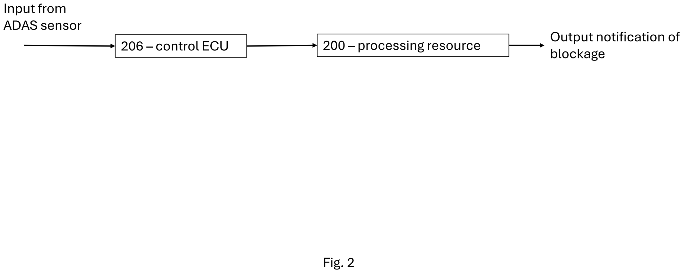

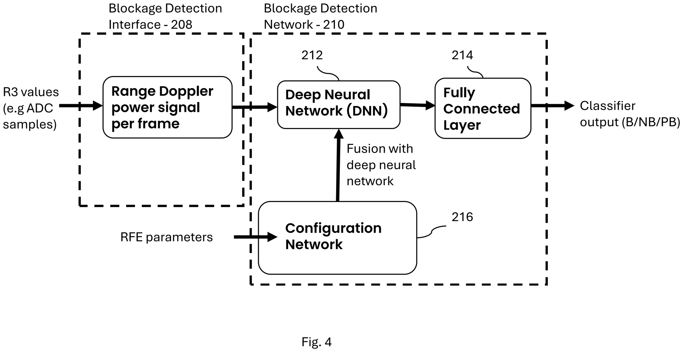

The functioning of processing resource 200 is described with reference to Figures 1a, 1b, 1c, 2, 3, 4, 5 and 6. The processing resource 200 is configured to determine blockage of an ADAS sensor 202. Such blockage may occur due to the presence of a blocking material 204 covering at least part of the ADAS sensor 202, for example, snow, dust, leaves or other blocking material. The output from the processing resource, as described below, may notify an external system of full blockage, partial blockage or zero blockage of the ADAS sensor 202.

A blocked ADAS sensor 202 is illustrated schematically in Figure 1a. The ADAS sensor 202 transmits power (P_{Tx} ). The blocking material 204 absorbs some of the power transmitted by the ADAS sensor 202 which means that the radiated power (P_{rad}) is lower than P_{Tx}.

Some of the transmitted power is reflected (Pₗₑₐₖ) by the blocking material and is received at high signal strength at very low range. In other words, the reflected power is received with high Signal to Noise Ratio (SNR) and this will form the first bin of the Fast Fourier Transform of the received signal.

Some of the transmitted signal power is consumed in the blocking material (Pₗₒₛₛ). The amount depends on the dielectric constant (permittivity), electric tangent loss and thickness of the blocking material.

A portion of the power transmitted by the ADAS sensor 202 will reach the target of the signal transmitted by the sensor 202 and some of the signal reflected by the target will reach the sensor but will do so at reduced strength (P_{ref}).

That is to say, the radiated power that will reach the target is determined by the equation: ${P}_{rad} = {P}_{TX} - {P}_{leak} - {P}_{loss}$

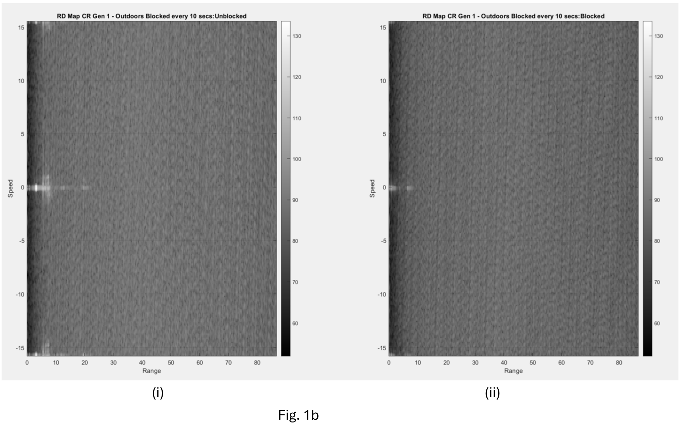

Experimentally, the impact of a blockage on a received signal is shown in Figure 1b. The figure on the left (enumerated with i) shows an unblocked signal frame. The figure on the right (enumerated with ii) shows the impact of blocking the sensor with a wet towel every 10 seconds to simulate the effect of, say, snow or ice.

In the case of an unblocked ADAS sensor 202, more of the signal power will be received from the radar scene. In the case of an blocked ADAS sensor 202, some of the signal power is absorbed by the material which blocks the ADAS sensor 202 e.g. snow, leaves etc. This is illustrated in Figure 1b where you see bright spots around the vicinity of speed =0, i.e. velocity index = 0 in the unblocked example where the received value is near to 130 dB. It can be seen in the blocked example that, at the same speed, the received value is lower than 130 dB. That is, the received signal for the blocked example has a larger noise component. Another key difference is that at the same zero km/h speed, it can be seen that the blocked sensor misses some of the bright spots (targets) that are picked up by the unblocked sensor as they are buried under the noise floor.

The figures shown inFigure 1bare the result of averaging over 3868 frames received at the ADAS sensor. A frame consists of processing a train of 256 chirps received by the RX (receiver) antennas (4 RX antennas in the described experiment). Each chirp has 1024 samples for range calculation. The frame is repeated every 40-50 milliseconds. The frame length is of the order or 8-10 milliseconds. Put more simply, for the purpose of this example, a frame is 256 chirps times 1024 samples of 4 ADC samples

The average signal data RD2 which is calculated from the received frames can be described using the equation below: $RD 2 \left(r, v\right) = \frac{1}{{N}_{rx}} {\sum }_{t = 1}^{{N}_{rx}} {\left|RD3\left(t, r, v\right)\right|}^{2}$ (1)

Where RD2(r,v) is the average signal data (e.g. average Range Doppler power signal), r and v are respective range and velocity indices and RD3 (t, r, v) is the received frame data (e.g. Range Doppler power signal) at the respective antenna t at respective range r and velocity v. Nᵣₓ is the number of receiving antennas. The index v is the chirp index (i.e. slow time index) which varies from 1 to 256 and r is the range index (fast time sample index) within a single chirp varying from 1 to 1024 and t is the antenna index denoting the RX antennas 1 to 4.

The RD3 values are determined by the control ECU 206 of the ADAS sensor 202. The control ECU 206 may form part of the processing resource 200 or may be external to the processing resource 200 and configured to communicate with the processing resource 200 using any suitable data communication protocol.

In a step S100, the average signal data RD3 is provided by the control ECU 206 to a blockage detection interface 208 at the processing resource 200. It may be provided automatically by the ECU 206 or on request from, say, a driver of a vehicle to which the ADAS sensor 202 are attached. The driver may wish to determine whether there is a blockage of the ADAS sensor 202 in difficult weather conditions such as, for example, snow or heavy rain.

In step S102, the blockage detection interface 208 determines a map of RD2 values as the values for RD3 for each antenna are received. The values for RD3 may also be understood as the analog -to-digital conversion (ADC) values generated by the ADAS sensor. That is, every time each of the antennas has provided a value for RD3, a map of RD2 values is calculated using equation 1 above. In other words, the blockage detection interface 208 processes the received signal data to generate processed signal data. The map of RD2 values forms part of what may be described as the average signal data set. The average signal data set may also comprise other variables associated with the map of RD2 such as, for example, the number of transmission antennas (TX), the number of receiver antennas (RX), the transmission power (in dBm), the receiver gain (dB), the effective bandwidth (GHz) and the high pass filter corner frequency (MHz).

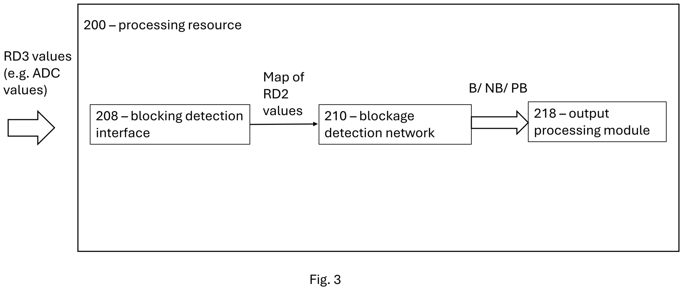

In step S104, the blockage detection interface 208 then provides the map of RD2 values to the blockage detection network 210. It may be provided with the other parts of the average signal data set. However, the other parts of the average signal data set may be retrieved by the blockage detection network 210 from, for example, local storage, if they are not provided alongside the map of RD2 values. The blockage detection network 210 is illustrated schematically in Figure 3 and will now be described with reference to Figures 3, 4 and 5.

The blockage detection network 210 comprises a deep neural network 212, a fully connected layer 214 and a configuration network 216.

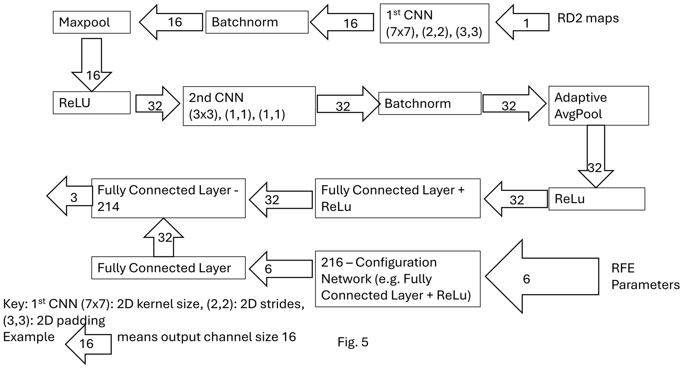

The deep neural network 212 comprises a plurality of convolutional neural network layers (as illustrated in Figure 5). The convolutional neural network layers may comprise one or more of a plurality of convolutional layers, Batchnorm layers, maximum pooling layers, ReLu layers and adaptive average pooling layers which output to a final layer which is a fully connected layer. The architecture of the deep neural network illustrated in Figure 5 is an example only and it will be appreciated that other architectures can be used to implement the processing of RD2 maps. The deep neural network 212 receives a map of RD2 values for a frame. An example of such a map is provided in Figure 1b where a map of an unlocked frame and a blocked frame is shown. Figure 1b(i) shows an unblocked frame and Figure 1b(ii) shows a blocked frame.

We will describe next the configuration network 216 and then we will describe how the deep neural network 212 is fused with the configuration network 216 (by way of supervised learning) and this provides outputs for analysis using the fully connected layer 214. The training of the deep neural network 212 will be described below in terms of feedforward/back propagation - based training.

The configuration network 216 receives, as an input, a set of radar front end (RFE) parameters which comprises the number of transmission (TX) antennas, the number of receiving (RX) antennas, transmission power (dBm), receiver gain (dB), the effective bandwidth of the radar front end (GHz) and the high pass filter corner frequency (MHz), which are provided with the average signal data set or retrieved by the blockage detection network 210 (as set out above). The configuration network 216 may also receive further parameters which are shown to have an impact on the received power of the ADAS sensor when a blockage is in place.

The configuration network 216, for example, may comprise a fully connected layer and a rectified linear unit and this provides an output to a fully connected layer where fusion between the configuration network 216 and the deep neural network 212 is implemented. In the illustrated example the configuration network has 6 input channels and 6 output channels which are output to the fully connected layer, i.e. fusion is performed based on the 6 output channels. This, however, is just an example and other architectures can be used to implement the aspects and embodiments described herein.

The fusion between the configuration network 216 and the deep neural network 212, in the illustrated example, is introduced at the final layer of the deep neural network 212. However, in other examples, the fusion may be introduced at any layer in the deep neural network 212. Even where the fusion is with a convolutional layer, the radar parameter features could be fused as a separate channel (with matching to the input channel) at its input.

After the fusion at the final layer of the deep neural network 212 (or after the final layer of the deep neural network 212 in the event fusion is introduced prior to the final layer of the deep neural network 212), the output is provided to the fully connected layer 214 which provides 3 channels corresponding to a probability of the ADAS sensor 202 being fully blocked, partially blocked or not blocked at all.

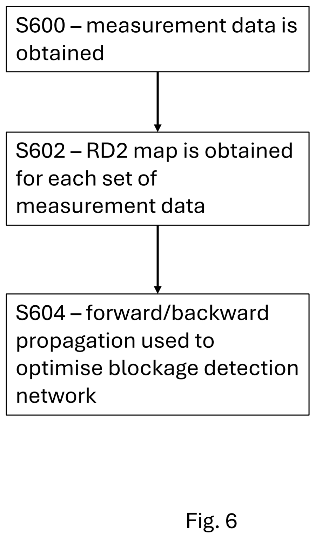

We will now describe how supervised learning, and specifically feedforward/backward propagation, may be used to train the blockage detection network 210 as described above. We will describe how the blockage detection network 210 will be trained to be independent of the configuration of the ADAS sensor 202. This will be described with reference to Figure 6.

In a step S600, a data set is obtained which comprises 20 measurements with varying sensor configurations. Each sensor configuration is defined by a set of radar front end (RFE) parameters. This may comprise one or more of, for example, the number of transmission (TX) antennas, the number of receiving (RX) antennas, transmission power (dBm), receiver gain (dB), the effective bandwidth of the radar front end (GHz) and the high pass filter corner frequency (MHz). Each measurement is taken from a sensor which is configured in accordance with the sensor configuration. Various blockages are used (e.g. sand, leaves, snow, rain and, in various instances, no blockages are used. That is, in some of the 20 measurements, the sensor is blocked and in some of the 20 measurements, the sensor is unblocked. Additionally, partial blockages may also be used. The number of frames over which the RD2 map is determined is also randomly varied. Further measurements can be used (again with differing sensor configurations, blockages and number of frames) in the testing of the blockage detection network 210. In other examples, more than 20 measurements may be used, more types of blockages may be used, and a wider range of the number of frames may also be used.

In a step S602, for each measurement, the RD2 map is obtained. That is, RD2 maps corresponding to full blockages, partial blockages and no blockages are obtained. Examples of the RD2 maps corresponding to blocked and unblocked sensors are shown in Figure 1b. It is clear that the maps are different and this difference between the RD2 maps can be used to train a corresponding neural network to identify a blocked or unblocked sensor.

In a step S604, forward/backward propagation is used to optimise the weights and biases of the configuration network 216 and is also used to optimise the weights and biases of the fully connected layer 214 and is also used to optimise the kernel filter of the convolution layers of the deep neural network 212. It is also used to optimise the parameters (e.g. mean and standard deviation) of the batch normalisation layer of the deep neural network 212. The data set obtained in step S600 is used to implement the feedforward/backward propagation. For each measurement, the RFE values corresponding to each sensor configuration is fed through the configuration network 216 and the RD2 map is fed through the deep neural network 212. The RFE values and the RD2 map values are matched to a labelled output (following the output of the fully connected layer 214) corresponding to a blocked, unblocked or partially blocked ADAS sensor 202 corresponds to that measurement. The output following the completion of the forward/backward propagation is an optimised deep neural network 212 and an optimised configuration network 216 in addition to an optimised fully connected layer 214.

That is to say, the deep neural network 212 is configured to receive the map of RD2 values and the respective convolutional layers are applied to the map of RD2 values. Each convolutional layer comprises a kernel filter which is optimised to filter features of the map which identify that the RD2 map is received from a blocked ADAS sensor. As is shown in Figure 1b, a blocked ADAS sensor provides a different map of RD2 values. In summary, the RD2 map corresponding to an unblocked sensor shows that more signal power is received whereas the RD2 map corresponding to a blocked sensor shows that less signal power is received because of the received signal is absorbed by the blockage. As detailed above, during the training, the convolutional layers are trained to match maps of RD2 values which indicate a blockage to a blocked sensor at the output of the fully connected layer 214.

This provides a trained model (i.e. the blockage detection network 210) which is trained to be independent of the sensor configuration and therefore does not need retraining each time a new sensor configuration is introduced. The training of the model enables the blockage detection network 210 to provide a probability of one of a blocked, unblocked or partially blocked ADAS sensor 202 at the output of the fully connected layer 214.

In step S106, where the map of RD2 values and the other parts of the average data set have been provided to the blockage detection network 210 (in step S104), an output can then be obtained from the blockage detection network 210 which provides probabilities of a fully blocked, partially blocked or not blocked ADAS sensor 202. In other words, the RD2 values returned by the ADAS sensor 202 (as a result of the measured RD3 values) are used to determine a blockage of the ADAS sensor 202 by the blockage detection network 210.

In step S108, the output from the blockage detection network 210 (i.e. the probabilities of a fully blocked, partially blocked or not blocked ADAS sensor 202) can be processed by the output processing module 218. The processing compares the respective probabilities to identify what is more likely from the possibilities of an ADAS sensor 202 which is not blocked, partially blocked or fully blocked. If the highest probability is that the ADAS sensor 202 is not blocked, then the output processing module 218 may be configured to discard the output. Alternatively or optionally, the output processing module 218 may generate a notification for the control ECU 206 which indicates that there is no blockage present on the respective ADAS sensor 202. If the highest probability is one of a blockage or partial blockage, then the output processing module 218 is configured to generate a notification for the control ECU 206. The notification contains data which indicates the respective full or partial blockage. In any case, the notification may be transmitted in accordance with the CanBUS standard. The notification is provided to the ECU 206 in a step S110. The notification may be provided to another computing device which is distinct from the ECU 206.

In summary, the processing resource 200 described above provides a blockage detection network 210 which is trained to be independent of the sensor configuration of the ADAS sensor 202. This is by using the configuration network 216 and training the configuration network 216 using various sensor configurations to learn the dependence of blockage behaviour on the RFE parameters, where that training is alongside the training of the deep neural network 212. The RFE parameters which are used to train the configuration network 216 are just examples and other RFE parameters could also be used. The training of the blockage detection network 210, i.e. a trained model which is trained to be independent of the configuration of the ADAS sensor 202, means that when a new ADAS sensor 202 or a new configuration of that ADAS sensor 202 is introduced, only the inputs to the configuration network 216 need to be adjusted and the blockage detection network 210 does not need to be re-trained.

As an additional benefit, the processing resource 200 can be implemented using resource constrained devices. Compared to the prior art examples, 96% accuracy of blockage detection can be achieved by the blockage detection network 210. This is 7% more accurate than prior art examples. This allows for a much more memory-efficient implementation which requires approximately 30 kb memory storage and approximately 5.2% SIMD-DSP processor load when a blockage prediction is required every 0.25 seconds.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer implemented method of determining the presence of a blockage of an ADAS sensor, wherein the method is implemented by a processing resource, the method comprising:
receiving signal data associated with signals received by an ADAS sensor;
processing the signal data to generate processed signal data;
using a trained model to generate blockage inference data indicative of a blockage of the ADAS sensor, wherein the trained model is trained to be independent of the configuration of the ADAS sensor.

2. A method according to Claim 1, wherein the method further comprises providing an output indicating blockage of an ADAS sensor, wherein the output is generated based on the blockage inference data.

3. A method according to Claim 1, wherein the output indicates at least one of: partial blockage, full blockage or zero blockage of the ADAS sensor.

4. A method according to Claim 1, wherein training the model to be independent of the configuration of the ADAS sensor comprises training the trained model using data associated with a plurality of sensor configurations

5. A method according to Claim 1, wherein the trained model comprises a convolutional neural network trained to identify features in received data which indicate at least one of a full blockage, partial blockage and no blockage.

6. A method according to Claim 1, wherein processing the signal data to generate processed signal data comprises determining an average signal data set comprising average signal data where the average signal data is computed over a plurality of receiving antennas.

7. A method according to Claim 6, wherein the average signal data is computed by the equation: $RD 2 \left(r, v\right) = \frac{1}{{N}_{rx}} {\sum }_{t = 1}^{{N}_{rx}} {\left|RD3\left(t, r, v\right)\right|}^{2}$ Where RD2(r,v) is the average signal data, r and v are respective range and velocity indices and RD3 (t, r, v) is the received frame data at the respective antenna at time instance t at respective range index r and velocity index v.

8. A method according to Claim 1, wherein the blockage inference data provides a probability of at least one of a full blockage, partial blockage or no blockage.

9. A method according to Claim 1, wherein the processing resource is mounted to the ADAS sensor.

10. A method according to Claim 1, wherein the signal data comprises analog-to-digital conversation (ADC) data.

11. A method according to Claim 2, wherein the output is provided in accordance with the CANBUS standard.

12. A method according to Claim 2, wherein the output is provided to a computing device.

13. An advanced driver assistance system configured to implement the method of any of Claims 1 to 12.

14. . A system configured to implement the method of any of Claims 1 to 12.

15. A processing resource comprising a processor and memory including executable instructions that, as a result of execution by the processor, causes the computing device to perform the method of any of claims 1 to 12.

## Amended claims

### Amended claims in accordance with Rule 137(2) EPC.

1. A computer implemented method of determining the presence of a blockage of an ADAS sensor (202), wherein the method is implemented by a processing resource (200), the method comprising:
receiving (S100) signal data associated with signals received by an ADAS sensor (202); processing the signal data to generate processed signal data;
using a trained model (210) to generate blockage inference data indicative of a blockage of the ADAS sensor (202), wherein the trained model is trained to be independent of the configuration of the ADAS sensor (202), wherein the trained model (210) provides a configuration neural network (212) and wherein the trained model (210) further comprises a fusion model which fuses sensor data with a set of parameters which describe the sensor configuration to estimate the probability of the sensor being blocked by a foreign object.

2. A method according to Claim 1, wherein the method further comprises providing an output indicating blockage of an ADAS sensor (202), wherein the output is generated based on the blockage inference data.

3. A method according to Claim 1, wherein the output indicates at least one of: partial blockage, full blockage or zero blockage of the ADAS sensor (202).

4. A method according to Claim 1, wherein training the model to be independent of the configuration of the ADAS sensor (202) comprises training the trained model using data associated with a plurality of sensor configurations

5. A method according to Claim 1, wherein the trained model comprises a convolutional neural network trained to identify features in received data which indicate at least one of a full blockage, partial blockage and no blockage.

6. A method according to Claim 1, wherein processing the signal data to generate processed signal data comprises determining an average signal data set comprising average signal data where the average signal data is computed over a plurality of receiving antennas.

7. A method according to Claim 6, wherein the average signal data is computed by the equation: $RD 2 \left(r, v\right) = \frac{1}{{N}_{rx}} {\sum }_{t = 1}^{{N}_{rx}} {\left|RD3\left(t, r, v\right)\right|}^{2}$ Where RD2(r,v) is the average signal data, r and v are respective range and velocity indices and RD3 (t, r, v) is the received frame data at the respective antenna at time instance t at respective range index r and velocity index v.

8. A method according to Claim 1, wherein the blockage inference data provides a probability of at least one of a full blockage, partial blockage or no blockage.

9. A method according to Claim 1, wherein the processing resource is mounted to the ADAS sensor (202).

10. A method according to Claim 1, wherein the signal data comprises analog-to-digital conversation (ADC) data.

11. A method according to Claim 2, wherein the output is provided in accordance with the CANBUS standard.

12. A method according to Claim 2, wherein the output (S110) is provided to a computing device.

13. An advanced driver assistance system configured to implement the method of any of Claims 1 to 12.

14. A system configured to implement the method of any of Claims 1 to 12.

15. A processing resource comprising a processor and memory including executable instructions that, as a result of execution by the processor, causes the computing device to perform the method of any of claims 1 to 12.
